# EUROPEAN PATENT APPLICATION

(11) **EP 2 022 671 A1**
(43) Date of publication of application: **11.02.2009**
(21) Application number: 08252622.9
(22) Date of filing: 01.08.2008
(51) Int. Cl.: B60R 3/00, F01P 1/00, B60H 1/00

(54) **Heated cab entry steps**

(30) Priority: 01.08.2007 US 832520
(71) Applicant: PACCAR INC., Bellevue, WA 98804 (US)
(72) Inventor: VanderGriend, Ben, Woodinville, WA 98077 (US); Wong, Alec, Bellevue, WA 98006 (US); Johnson, Jason, Maple Valley, WA 98038 (US)
(74) Representative: Tranter, Andrew David

(57) **Abstract**

A heated step system for a vehicle having a heat source associated with a compartment. The system includes a step attached to an exterior portion of the vehicle and at least one aperture located near the step. The system further includes a duct having a first end in fluid communication with the compartment and a second end in fluid communication with the at least one aperture. The duct conveys warm air from the compartment to the at least one aperture so that the warm air passes through the at least one aperture to an area around the step, thereby warming the step.

## Description

### FIELD OF THE PRESENT DISCLOSURE

The presently disclosed subject matter relates generally to vehicle steps, and more particularly to steps for providing an operator with a means of entrance to and egress from the cab of a heavy duty vehicle.

### BACKGROUND

Industrial vehicles, such as heavy duty trucks, are often equipped with one or more steps to assist an operator with ingress to and egress from the cab of the vehicle. Some steps have a generally solid tread with optional drain holes to facilitate drainage of water from the treads. Other steps have a pattern of openings extending through the tread. The openings provide a drain path for water that would otherwise accumulate on the tread. For some such steps, the edges of the openings are raised to provide additional traction on the surface of the tread.

During cold weather, snow and ice can accumulate on the treads of the step, which causes the steps to become slippery and can make ingress to and egress from the cab hazardous. In addition, dirt and other debris tends to accumulate on the step.

The steps of some vehicles are exposed to the airstream when the vehicle is moving, and as a result, the airflow tends to clear the steps of accumulated snow, dirt, and debris. However, for other vehicles, the steps are recessed behind the front fender and thus, are not exposed to the airstream. For these vehicles, a low pressure area forms between the steps when the vehicle is moving. Consequently, the resulting pressure differential between the steps and the airstream tends to hold snow, dirt, and other debris on the step.

In addition to holding snow, dirt, and other debris on the step, the low pressure areas that can form between the steps also reduce the aerodynamic efficiency of the vehicle. As the truck moves, the low pressure areas create a turbulent wake in the airstream as air comes off of the front fender and passes by the steps. This turbulence results in added drag to the truck and accordingly, reduces the fuel efficiency of the truck.

### SUMMARY

A heated step system is disclosed for a vehicle having a heat source associated with a compartment. The vehicle has a step attached to an exterior portion and at least one aperture located near the step. A duct has a first end in fluid communication with the compartment and conveys warm air from the first end of the duct to the second end of the duct. Warm air passes from the second end of the duct through the at least one aperture to an area around the step, thereby warming the step.

A vehicle is disclosed to have an engine mounted to a frame and located within an engine compartment, which is also mounted to the frame. A cab that defines a vehicle operator area is also mounted to the frame and has a door to provide access to the vehicle operator area. A step is mounted on the vehicle below the door to assist with ingress to and egress from the vehicle operator area. A duct is adapted to convey air from the engine compartment through at least one apertures located in the step.

Another heated step system for a vehicle is disclosed, wherein the vehicle has an engine located within an engine compartment. The heated step system includes a step located on an exterior portion of the vehicle. The system further includes a collection means for collecting air in the engine compartment and a conveying means for conveying the collected air to a location near the step. The system also includes a distributing means for distributing the conveyed air to selected portions of the step.

Also disclosed is a method of heating a step located on the outside of a vehicle that includes collecting air from within an engine compartment that houses the vehicle engine. The method further includes conveying the collected air to a location near the step and distributing the conveyed air to selected portions of the step.

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

### DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:
FIGURE 1 is an isometric view of the cab and engine compartment of a heavy duty truck;
FIGURE 2 is an isometric view of a first embodiment of the cab entry steps of the heavy duty truck of FIGURE 1;
FIGURE 3 is an isometric, partial cut-away view of the cab entry steps of FIGURE 2;
FIGURE 4 is an isometric, partial cut-away view of a second embodiment of cab entry steps suitable for use in the heavy duty truck of FIGURE 1;
FIGURE 5 is an isometric, partial cut-away view of a third embodiment of cab entry steps suitable for use in the heavy duty truck of FIGURE 1;
FIGURE 6 is an isometric view of a fourth embodiment of cab entry steps suitable for use in the heavy duty truck of FIGURE 1; and
FIGURE 7 is an isometric, partial cut-away view of the cab entry steps shown in FIGURE 6.

### DETAILED DESCRIPTION

The presently disclosed heated steps are suitable for use with any vehicle having stepping surfaces on which snow and ice can accumulate during cold weather. Although the embodiments illustrated and described herein show the heated steps used in conjunction with a Class 8 truck, it should be understood that the heated steps can be used on any class of commercial truck and/or trailer. Further, use of the heated steps is not limited to commercial vehicles, but can also include recreational vehicles, busses, vans, pickup trucks, and any other vehicles that have stepping surfaces prone to the accumulation of ice and snow. Also, while steps to facilitate ingress to and egress from the cab of a truck are described herein, it should be understood that the heated steps may be located on other areas of the truck.

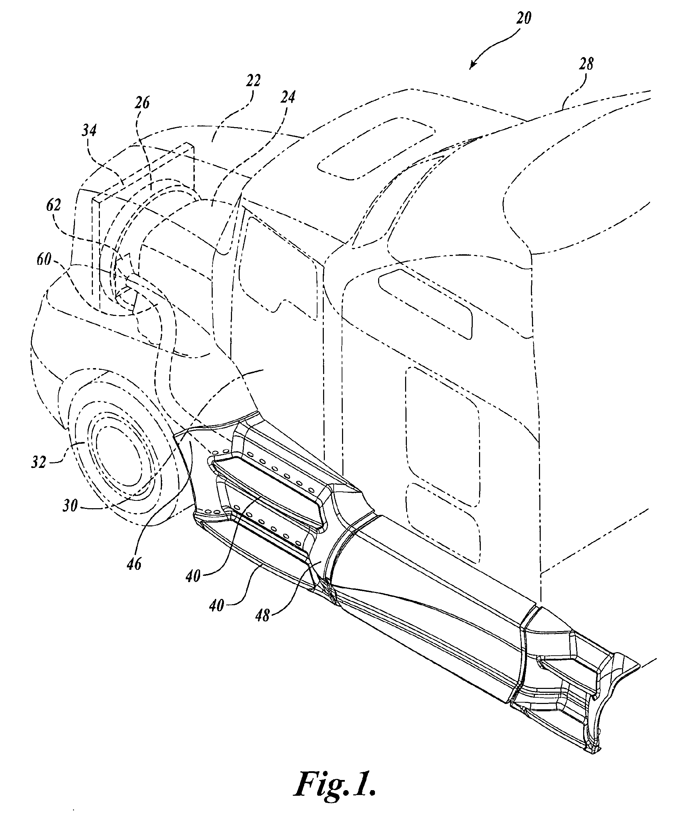

FIGURE 1 shows a partial view of a heavy duty truck 20 with a representative embodiment of heated cab entry steps. The truck 20 includes a frame (not shown) supported by a plurality of wheels 32. An engine 24 is mounted to a front end of the frame and is disposed within an engine compartment 22. The engine 24 is coupled to one or more wheels 32 by a known transmission system to drive the wheels 32, thereby providing locomotion to the truck 20. A cooling fan 26, which is part of an engine cooling system, is located in the engine compartment 22 and provides a steady flow of air within the engine compartment 22 when the engine is running.

A cab 28 is mounted on the frame to the rear of the engine compartment 22 and provides a location from which a person can operate the truck 20. Access to the cab 28 is through one or more doors 30 located on the sides of the cab 28. Entrance to and egress from the cab 28 is aided by the inclusion of one or more steps 40 located below the door. While the illustrated embodiment shows an upper step and a lower step, it should be understood that the number of steps can vary according to a number of factors to include one step, three steps, or any other suitable number.

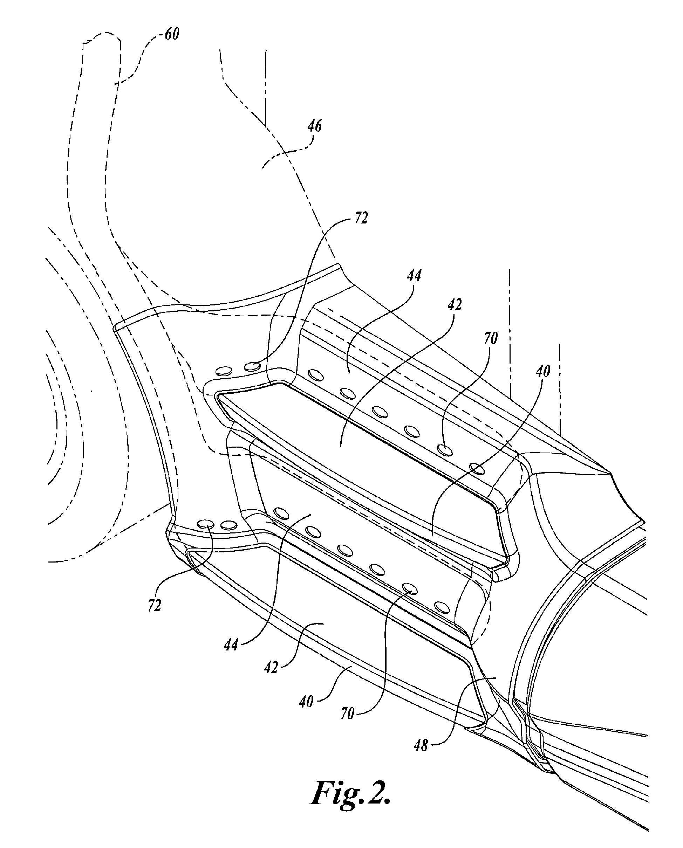

Referring to FIGURE 2, each step 40 includes a tread 42 and a riser 44. The tread 42 is the upper horizontal surface of the step 40 on which the foot is placed. As shown in FIGURE 2, the riser 44 extends upward from the inboard edge of the tread 42. In the embodiment shown, the forward end of the step 40 is located to the rear of the front fender 46. The step 40 is faired into a rear surface of the front fender 46 to provide an aerodynamic and aesthetically pleasing transition between the step 40 and the fender 46. The rear end of the step 40 is located forward of a rear fairing 48 that extends from the steps 40 in a rearward direction along the side of the truck 20. The rear end of the step 40 is faired into a forward surface of the rear fairing 48 to provide an aerodynamic and aesthetically pleasing transition.

Returning to FIGURE 1, a duct 60 is mounted to the truck 20 to direct air from the engine compartment 22 to the step 40. The duct 60 may be formed of any material having suitable strength and heat resistance characteristics, including metals and thermoplastics. The duct 60 may be rigid, as in the case of a formed metal conduit, or flexible, as in the case of a standard engine hose. Alternately, some or all of the duct 60 may be formed to be integral with other parts of the vehicle 20.

The air that is delivered from within the engine compartment 22 to the step 40 is typically warmer than ambient air outside of the vehicle because heat radiates off of the engine to raise the temperature inside the engine compartment. Further, the fan 26 of an engine cooling system blows air through a radiator 34 located in the front of the engine compartment to further disperse engine heat through the engine compartment 22. Thus, the engine 24 heats the air within the engine compartment to provide a steady source of warm air to heat the vehicle steps 40 when the engine 24 is running.

A first end of a duct 60 is disposed within the engine compartment 22. In the embodiment illustrated in FIGURE 1, a blower 62 is coupled to the first end of the duct 60. The blower 62 is selectively operable to create an airflow within the duct 60 by drawing air from the engine compartment 22 into the first end of the duct 60. In one embodiment, the blower 62 is driven by an electric motor that is powered by the electrical system of the truck 20. In an alternate embodiment, the blower 62 is driven by compressed air supplied by the compressed air system of the truck 20. In yet another alternate embodiment, a drive shaft of the blower 62 is mechanically coupled to the engine fan belt so that the motion of the fan belt drives the blower 62.

In an alternate embodiment, the blower 62 is omitted. In this embodiment, the cooling fan 26 is used to drive warm air from the engine compartment 22 into the first end of the duct 60. In particular, the cooling fan 26 creates an axial airflow from the front of the engine compartment 22, through the vehicle radiator 24, towards the rear of the engine compartment 22. An inlet to the first end of the duct 60 is positioned within the engine compartment 22 so that at least a portion of the axial airflow from the fan enters the inlet. In another alternate embodiment, a volute may be positioned around the perimeter of the fan blades to collect the radial airflow emitted from the tips of the fan blades as the fan 26 turns. The volute redirects the collected airflow to the first end of the duct 60.

An optional heater can be included in the system to provide additional heat if an airflow having a temperature greater than that which is produced in the engine compartment is desired. In addition, the inclusion of a heater provides the system with a supply of warm air when the engine is not on or has not yet reached operating temperatures. The heater is preferably powered by the electrical system of the vehicle 20 so that a running engine 24 is not required to operate the heater. The heater can be located in the engine compartment 22 at the first end of the duct 60 or, alternately, at a location between the first and second ends of the duct 60.

It should be understood that heat sources inherent to the vehicle may also be used. For example, the airflow through the duct 60 can be heated by engine exhaust gasses via an air to air heat exchanger. Similarly, the airflow can be heated by an engine fluid, such as coolant from an engine cooling system, be means of a fluid to air heat exchanger.

Warm air from the engine compartment 22 enters the first end of the duct 60 and is redirected through the duct 60 to the second end of the duct 60. The second end of the duct 60 is positioned near the step 40 to supply the redirected warm air to the step 40.

Referring to FIGURE 2, a first embodiment of the steps 40 of a truck 20 is illustrated in which each of the treads 42 has a generally solid surface. The illustrated embodiment shows an upper step and a lower step, but it should be appreciated that the disclosed system for heating steps is suitable for use with a single step or with any other number of steps. In the interest of clarity, the upper step is described herein with the understanding that similar structure is present in the lower step.

As best shown in FIGURE 2, a plurality of elliptical apertures 70 extends through the riser 44. The apertures 70 are in fluid communication with the second end of the duct 60 and direct the airflow from the second end of the duct 60 to the tread 42. In one embodiment, the apertures 70 are located to have a generally constant offset from the surface of the tread 42; that is, the apertures 70 are aligned to be parallel to the surface of the tread 42. In addition, one or more apertures 72 optionally extend through the rear side of the front fender 46. It should be appreciated that the shape and position of each aperture 70 and 72 can be varied to achieve a desired flow pattern in the warm air flowing through the plurality of apertures 70 and 72.

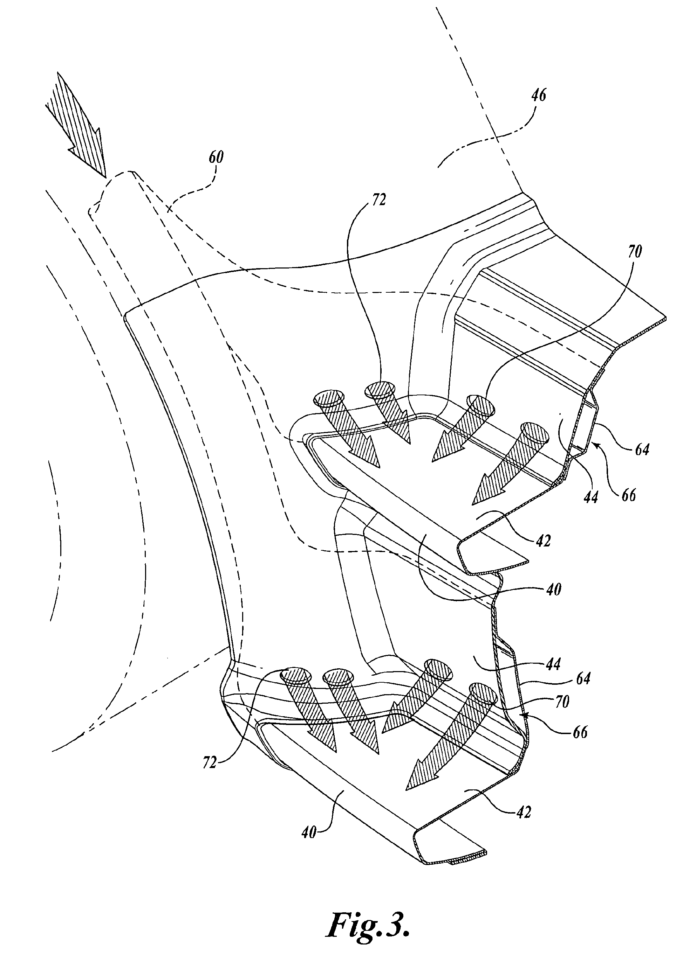

As shown in FIGURE 3, a closeout 64 is attached to the inboard side of the step 40. The closeout 64 has an outboard facing C-shaped portion that cooperates with the inboard surface of the riser 44 and the fender 46 to define a passageway 66 therebetween. The forward end of the passageway 66 is in fluid connection with the second end of the duct 60. The rear end of the passageway 66 is closed so that warm air entering the forward end of the passageway 66 from second end of the duct 60 exits the passageway through the apertures 70 and 72 located in the riser and the fender, respectively.

In use, the warm air redirected from the engine compartment 22 flows through the apertures 70 and 72 across the tread 42 of the step 40. The warm air melts snow and ice that may have accumulated on the tread and also heats the tread 42 to prevent future accumulation of snow and ice. Further, the airflow blows accumulated dirt and debris off of the step 40 and also helps prevent the future accumulation of dirt and debris.

In addition to the helping to keep the step 40 free of snow, ice, and debris, the airflow from the apertures also decreases the aerodynamic drag caused by the step 40. For existing steps that do not include the described airflow, areas of low pressure form around the steps as the vehicle 20 moves. These low pressure areas produce a wake in the airstream as it separates from the front fender and moves past the steps. This wake comprises turbulent flow, which results in an increase in the drag acting on the truck 20. However, when the heated air flows through the apertures 70 and 72, the pressure in the areas of otherwise low pressure is increased. The increase in pressure reduces the wake formed by the steps 40 and, therefore, reduces drag on the truck 20. It should be appreciated that the number, shape, and position of the apertures 70 and 72 can be varied in order to minimize the aerodynamic inefficiencies caused by the steps 40.

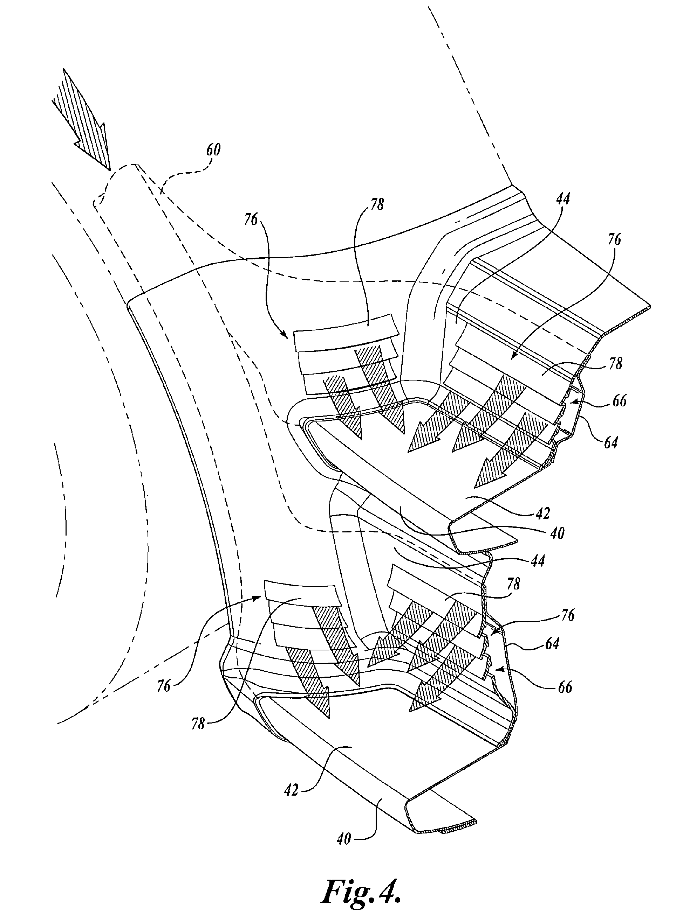

FIGURE 4 shows a second embodiment in which the apertures 70 and 72 located on the riser 44 and front fender 46 in FIGURES 2 and 3 are replaced by a plurality of louvers 76. Each louver 76 comprises a plurality of slats 78 extending horizontally across an opening to define a plurality of elongated horizontal slots. As shown in FIGURE 4, the slats 78 can be positioned at a predetermined angle in order to redirect the warm air in a desired direction as the warm air passes through the louver 76.

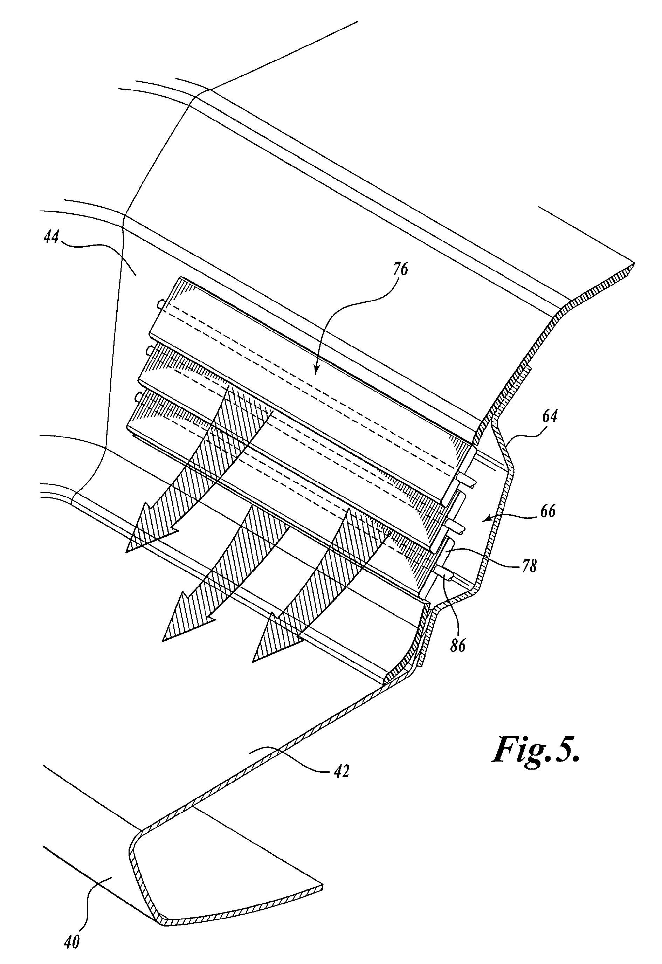

As illustrated in FIGURE 4, the slats 78 are fixedly positioned relative to the riser 42 and the front fender 46 such that warm air passing therethrough is directed down onto the tread 42 of the step 40. In an alternate embodiment shown in FIGURE 5, the slats 78 are pivotally connected to riser 42 and/or the front fender 46 at a pivot 86 so that the angle of the slats 78 is adjustable to selectively determine the direction of the airflow passing through the louvers 76.

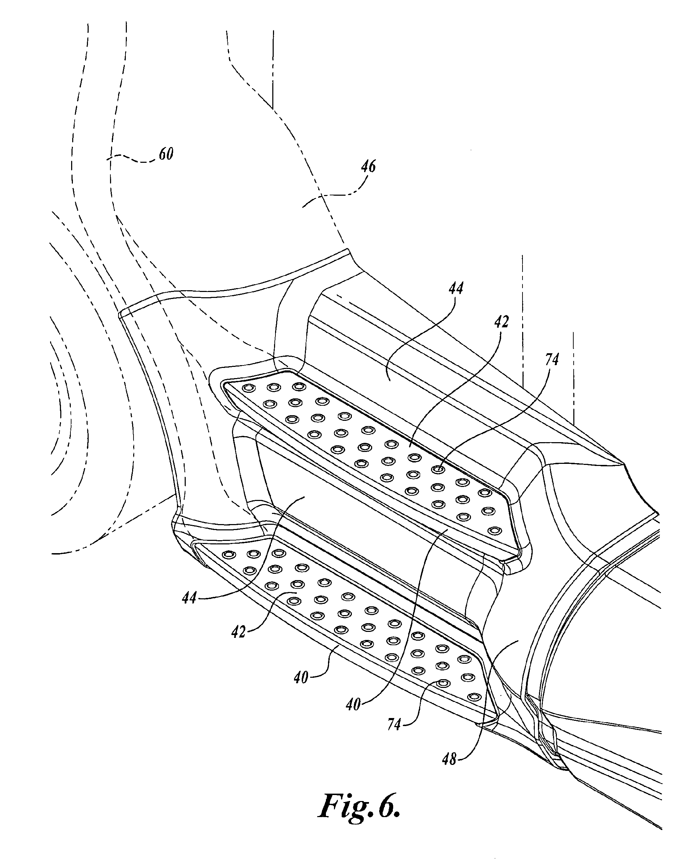

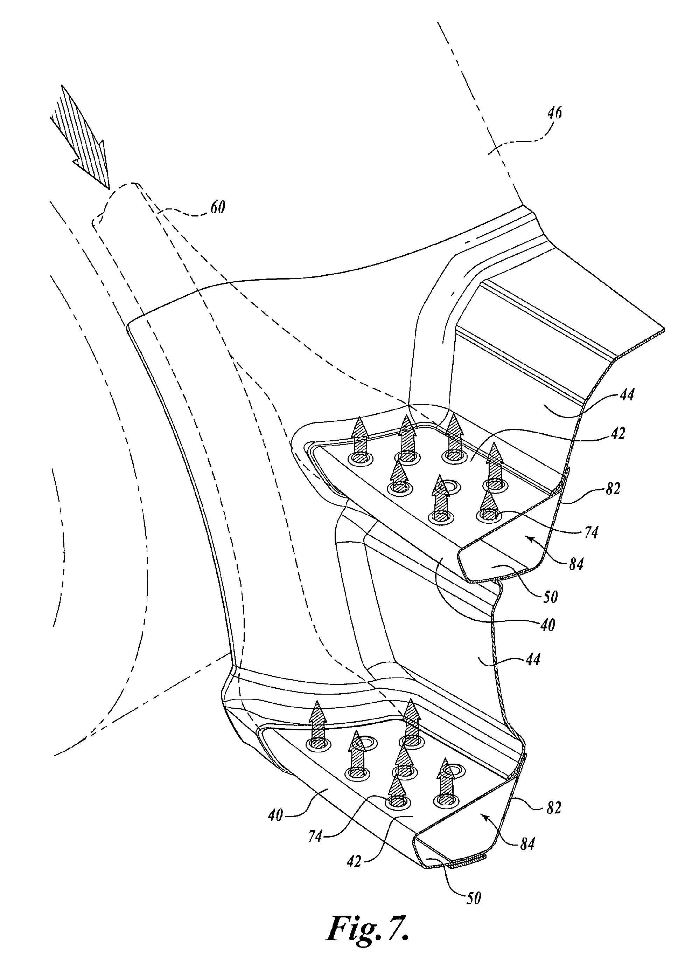

A third embodiment of the heated steps is illustrated in FIGURES 6 and 7. As shown in FIGURE 6, the tread 42 of each step 40 includes a plurality of apertures 74, the edges of which include flanged portions extending in an upward direction. The apertures 74 provide a path for rain and melted snow to drain from the surface of the tread 42 down through the step 40 to the ground, while the flanged portions provide additional traction on the tread 42. As best shown in FIGURE 7, the tread is an upper surface of a C-shaped channel 50 attached to the lower edge of a riser 44. A closeout 82 is coupled to the inboard side of the C-shaped channel 50 and cooperates with the C-shaped channel 50 to define a passageway 84. The forward end of the passageway 84 is in fluid connection with the second end of the duct 60. The rear end of the passageway 84 is closed so that warm air entering the forward end of the passageway 84 from second end of the duct 60 exits the passageway in an upward direction through the apertures 74 in the tread 42.

It should be understood that different elements of the above-described embodiments can be used in conjunction with each other to provide the desired performance of the heating system. For example, a step 40 with apertures 74 through the tread 42 can also receive a flow of warmed air from apertures 70 in the riser 44, apertures 72 in the fender 46, louvered openings, or any combination thereof according to the operators needs.

Under some conditions, it is desirable to stop the flow of warm air onto the step 40. For example, the warm airflow is unnecessary during warm weather, when there is no ice or snow to accumulate on the step 40. Further, in embodiments having a blower 62 or heater, operation of the heating system requires power to be supplied from the vehicle 20, which decreases the vehicle's operating efficiency. Accordingly, the system for heating the steps can be controlled to be selectively operated according to the preference of the operator. In an embodiment that includes a blower 62, the blower 62 can be selectively turned off or on to stop or start the flow of warm air from the engine compartment. Alternately, a valve 80 is attached to the duct 60 so that selectively opening or closing the valve 80 allows or prevents the flow of air through the duct. In embodiments including one or more louvers 76 with selectively positional slats 78, the slats can be moved to a closed position so that the slats 78 block the aperture to prevent warm air from passing therethrough.

While illustrative embodiments have been illustrated and described, it will be appreciated that various changes can be made therein without departing from the spirit and scope of the invention.

The embodiments of the invention in which an exclusive property or privilege is claimed are defined as follows:

## Claims

1. A heated step system for a vehicle, said vehicle having a heat source associated with a compartment and capable of elevating the temperature of air located therein, the heated step system comprising:
(a) a step located on an exterior portion of the vehicle;
(b) at least one aperture extending thought the exterior portion of the vehicle, the at least one aperture being located near to the step; and
(c) a duct having a first end in fluid communication with the compartment and a second end in fluid communication with the at least one aperture,
wherein the heated step system is adapted to convey air from the compartment through the duct, and out through the at least one aperture to a location near the step.

2. The heated step system according Claim 1, wherein the heat source is an engine and the compartment is an engine compartment.

3. The heated step system according Claim 2, further comprising a blower in fluid communication with the duct, the blower being capable of directing air from the engine compartment to the first end of the duct.

4. The heated step system according Claim 1, wherein the first end of the duct is adapted to collect air flowing axially from a fan disposed within the compartment.

5. The heated step system according Claim 1, wherein the first end of the duct is adapted to collect air flowing radially from a fan disposed within the compartment.

6. The heated step system according Claim 1, further comprising a heater capable heating air that passes through the duct.

7. The heated step system according Claim 1, further comprising a valve, the valve being operable to selectively stop the flow of air through the duct.

8. The heated step system according Claim 1, wherein the at least one aperture is located above the step so that the air directed through the at least one aperture flows over a surface of the step.

9. The heated step system according Claim 8, wherein the at least one aperture has an elliptical shape.

10. The heated step system according Claim 8, wherein the at least one aperture comprises a louver.

11. The heated step system according Claim 10, wherein the louver comprises a plurality of substantially parallel slats, said slats being fixedly attached to the vehicle to direct air from the duct in a predetermined direction.

12. The heated step system according Claim 10, wherein the louver comprises a plurality of substantially parallel slats, said slats being pivotally attached to the vehicle and selectively positionable to direct air from the duct in a selected direction.

13. The heated step system according Claim 1, wherein the step comprises a tread, the at least one aperture extending through the tread so that the air directed through the at least one aperture flows in an upward direction from the tread of the step.

14. A vehicle, comprising:
(a) a frame;
(b) an engine compartment mounted to the frame;
(c) an engine mounted to the frame and located inside of the engine compartment;
(d) a cab mounted to the frame, said cab defining a vehicle operator area and having a door providing access to the vehicle operator area;
(e) a step mounted to the vehicle and located below the door, the step comprising a tread and a riser;
(f) a plurality of apertures located in the vehicle near the step; and
(g) a duct adapted to convey air from within the engine compartment through the plurality of apertures.

15. The heated step system according Claim 13, wherein the plurality of apertures is located above the step so that the air directed through the at least one aperture flows over a surface of the step.

16. The heated step system according Claim 13, wherein the at least one aperture extends through the tread so that the air directed through the plurality of apertures flows in an upward direction from the tread.

17. A heated step system for a vehicle, said vehicle having an engine disposed within an engine compartment, the heated step system comprising:
(a) a step located on an exterior portion of the vehicle;
(b) a collection means for collecting air in the engine compartment;
(c) a conveying means for conveying the collected air from the engine compartment to a location near the step; and
(d) a distributing means for distributing the air conveyed from the engine compartment to selected portions of the step.
